(19) Europäisches Patentamt
European Patent Office
Office européen des brevets

(11) **EP 2 873 988 B1**

(12) **EUROPEAN PATENT SPECIFICATION**

(45) Date of publication and mention
of the grant of the patent:
**09.05.2018 Bulletin 2018/19**

(51) Int Cl.:
***G01S 13/90*** (2006.01)

(21) Application number: **14160447.0**

(22) Date of filing: **18.03.2014**

(54) **Method for SAR processing**

Verfahren zur SAR-Verarbeitung

Procédé de traitement RSO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2013 KR 20130138257**

(43) Date of publication of application:
**20.05.2015 Bulletin 2015/21**

(73) Proprietor: **Korea Aerospace Research Institute Yuseong-gu, Daejeon 305-806 (KR)**

(72) Inventor: **Yoon, Jae-Cheol 305-759 Daejeon (KR)**

(74) Representative: **Grünecker Patent- und Rechtsanwälte PartG mbB Leopoldstraße 4 80802 München (DE)**

(56) References cited:
**US-A- 5 200 754**

• **FENG HE ET AL: "Processing of Ultrahigh-Resolution Spaceborne Sliding Spotlight SAR Data on Curved Orbit", IEEE TRANSACTIONS ON AEROSPACE AND ELECTRONIC SYSTEMS, IEEE SERVICE CENTER, PISCATAWAY, NJ, US, vol. 49, no. 2, 1 April 2013 (2013-04-01), pages 819-839, XP011499567, ISSN: 0018-9251, DOI: 10.1109/TAES.2013.6494383**

• **KNUT ELDHUSET: "A new fourth-order processing algorithm for spaceborne SAR", IEEE TRANSACTIONS ON AEROSPACE AND ELECTRONIC SYSTEMS, vol. 34, no. 3, 1 July 1998 (1998-07-01), pages 824-835, XP055178117, ISSN: 0018-9251**

• **KNUT ELDHUSET: "Ultra High Resolution Spaceborne SAR Processing", IEEE TRANSACTIONS ON AEROSPACE AND ELECTRONIC SYSTEMS, vol. 40, no. 1, 1 January 2004 (2004-01-01), pages 370-378, XP055178324, ISSN: 0018-9251**

• **ELDHUSET K: "Spaceborne Bistatic SAR Processing Using the EETF4 Algorithm", IEEE GEOSCIENCE AND REMOTE SENSING LETTERS, IEEE SERVICE CENTER, NEW YORK, NY, US, vol. 6, no. 2, 1 April 2009 (2009-04-01), pages 194-198, XP011332433, ISSN: 1545-598X, DOI: 10.1109/LGRS.2008.2010781**

• **Yuchun Liu: "Study on Imaging Algorithms for Bistatic Radar", , 1 April 2013 (2013-04-01), XP055178268, Retrieved from the Internet: URL:http://oversea.cnki.net/kcms/detail/de tail.aspx?recid=&FileName=1013295719.nh&Db Name=CDFD2013&DbCode=CDFD&uid=WEEwN UF5YIRa UHZTZ1FnLw== [retrieved on 2015-03-23]**

EP 2 873 988 B1

**Description**

BACKGROUND

Field

The present invention relates to an image processing method for synthetic aperture radar (SAR), and more particularly to an image processing method for SAR, in which a new algorithm, i.e., 4th-order exact transfer function zero Doppler time (ETF4ZDT) is used to precisely calculate a relative distance between an object on the ground and a satellite within an observation time interval.

Description of the Related Art

A display apparatus

As a representative conventional image processing method for synthetic aperture radar (SAR), there are an effective Velocity calculation method and a 4th exact transfer function (ETF4). calculation method.
The effective velocity calculation method has been widely used in SAR processing for an aircraft that flies at an altitude of several km, but has a problem that many errors occur in calculation for the relative distance between the object on the ground and the satellite on an orbit having an altitude of 400km or higher since expressions are derived based on the assumption of a hyperbolic range history. In particular, the effective velocity calculation method has a problem that, when the image having a high resolution of sub-meter class is processed, the quality of the processed image has a limit.
Further, the ETF4 calculation method, which has been proposed to overcome the low-level precision of the effective velocity calculation method, derives the distance between the object on the ground and the satellite from the 4th order expansion of Taylor series without any hyperbolic assumption.
However, this method also has a problem that it cannot be used in an observation mode where spotlight, sliding spotlight or the like azimuth beam steering is used, because a domain of data resulted from the ETF4 process is a Doppler centroid domain determined according to squint angles even though the domain of the data resulted from the process has to be a zero Doppler domain in order to obtain a final SAR image.

[Related references]

(Patent Document 0001) Korean Patent No. 10-1207220 (November 27, 2012)

Feng He et al.: "Processing of Ultrahigh-Resolution Spaceborne Sliding Spotlight SAR Data on Curved Orbit", IEEE Transactions on Aerospace and Electronic Systems, vol. 49, no. 2, April 1, 2013, ISSN: 0018-9251 discloses a subaperture imaging algorithm for focusing ultrahigh-resolution spaceborne SAR data in sliding spotlight mode.

Knut Eldhuset: "A new fourth-order processing algorithm for spaceborne SAR", IEEE Transactions on Aerospace and Electronic Systems, vol. 34, no. 3, July 1, 1998, ISSN: 0018-9251 discloses a fourth-order signal aperture radar, SAR, processing algorithm for a general satellite-Earth relative motion. The two-dimensional exact transfer function, ETF, is calculated and range-variant phase corrections are calculated in order to process many azimuth lines per block. The ETF together with the phase corrections are called the fourth-order EETF, extended ETF.

US 5 200 754 A discloses a computational method, defined by a computational algorithm, that automatically corrects synthetic array radar focus errors.

SUMMARY

It is therefore the object of the present invention to provide an improved image processing method for synthetic aperture radar and a corresponding apparatus.
This object is solved by the subject matter of the independent claims.
The present invention is conceived to solve the foregoing problems, and an aspect thereof is to provide an image processing method for SAR, in which a 4th-order Exact Transfer Function zero Doppler time (ETF4ZDT) algorithm is used to precisely calculate a relative distance between an object on the ground and a satellite within an observation time interval

According to an aspect of another exemplary embodiment, an image processing method for synthetic aperture radar (SAR) is provided, including: by a 4$^{th}$-order exact transfer function zero Doppler time (ETF4DT) azimuth matched filter calculator of a satellite, obtaining a 4$^{th}$-order exact transfer function (ETF4) azimuth matched filter; by the domain transformer of the satellite, transforming a domain of the ETF4 azimuth matched filter; and by the ETF4DT azimuth matched filter calculator of the satellite, obtaining an ETF4ZDT azimuth matched filter through the transformed domain.

The ETF4 azimuth matched filter may be expressed by $M(W_a)=H^*(W_a)=\exp[-j\varphi(t_a^*)]$, where $H^*(W_a)$ is an azimuth spectrum, $\varphi(t_a^*)$ is a phase of the spectrum, and $t_a$ is an azimuth time.

BRIEF DESCRIPTION OF THE DRAWINGS

The above and/or other aspects will become apparent and more readily appreciated from the following description of exemplary embodiments, taken in conjunction with the accompanying drawings, in which:

FIG. 1 is a block diagram of an image processing system for SAR according to an exemplary embodiment of the present invention;
FIG. 2 is a graph showing an azimuth signal of an object, for explaining an image processing method for SAR according to an exemplary embodiment of the present invention;
FIG. 3 is a graph showing focusing at a beam center crossing time in an azimuth matched filter;
FIG. 4 is a graph showing focusing at a zero Doppler time in the azimuth matched filter; and
FIG. 5 is a graph showing that an arbitrary azimuth time domain is transformed in an azimuth signal.

DETAILED DESCRIPTION OF EXEMPLARY EMBODIMENTS

Hereinafter, exemplary embodiments according to the present invention will be described with reference to accompanying drawings. Also, terms and words used in the following description and claims have to be interpreted by not the limited meaning of the typical or dictionary definition, but the meaning and concept corresponding to the technical idea of the present invention on the assumption that the inventor can properly define the concept of the terms in order to describe his/her own invention in the best way.

Accordingly, the disclosure in the specification and the configurations shown in the drawings are just preferred embodiments of the present invention and do not cover all the technical idea of the present invention. Thus, it should be appreciated that such embodiments may be replaced by various equivalents and modifications at a point of time when the present application is filed.

Below, an image processing method for synthetic aperture radar (SAR) will be described according to an exemplary embodiment of the present invention.

First, concept of focusing to zero Doppler time will be described.

In a case where a satellite takes an image of an object on the ground, if $t_a$ is an azimuth time; $S(t_a)$ is an azimuth signal before azimuth compression (AC); $t_{ac}$ is a beam center crossing time; and $t_{a0}$ is a zero Doppler time, $S(f_a)$ <-----$^{FFT}$-----> $S(t_a)$ is established.

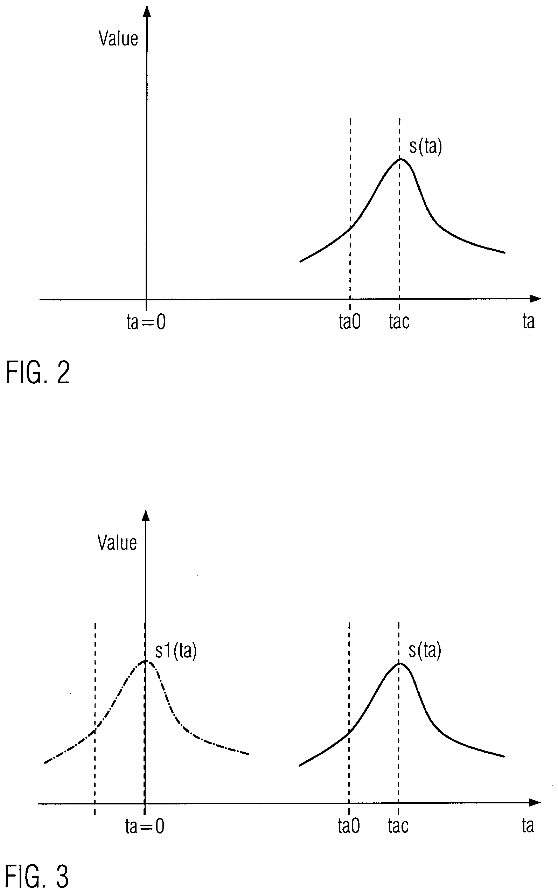

An azimuth first pixel of the taken image is regarded as n=0 when the signal is processed. Therefore, this point of time indicates $t_a = n \cdot PRI|_{n=0} = 0$ in FIG. 2.

$S_1(t_a)$ in FIG. 3 serves as an ETF4 azimuth matched filter with regard to $S(t_a)$. In this case, a signal for positioning the beam center crossing time of an original signal to $t_a=0$ is used as the azimuth matched filter.

$$\text{Let } S_1(f_a) <-----^{FFT}-----> S_1(t_a), \text{ and}$$

and

$$S(f_a) = S_1(f_a) \cdot \exp[2PI \cdot f_a \cdot (-t_{ac})] \text{ is established.}$$

is established.

Thus, the azimuth matched filter for the ETF4 is $M_1(f_a) = S_1^*(f_a)$, and a matched filtering result is as follows.

$$O_1(f_a) = S(f_a) \cdot M_1(f_a) =$$

$$S_1(f_a) \cdot \exp[2PI \cdot f_a \cdot (-t_{ac})] \cdot S_1{}^*(f_a) = \exp[2PI \cdot f_a(-t_{ac})]$$

Thus, a focused object $O_1(t_a)$ appears at $t_a = t_{ac}$.

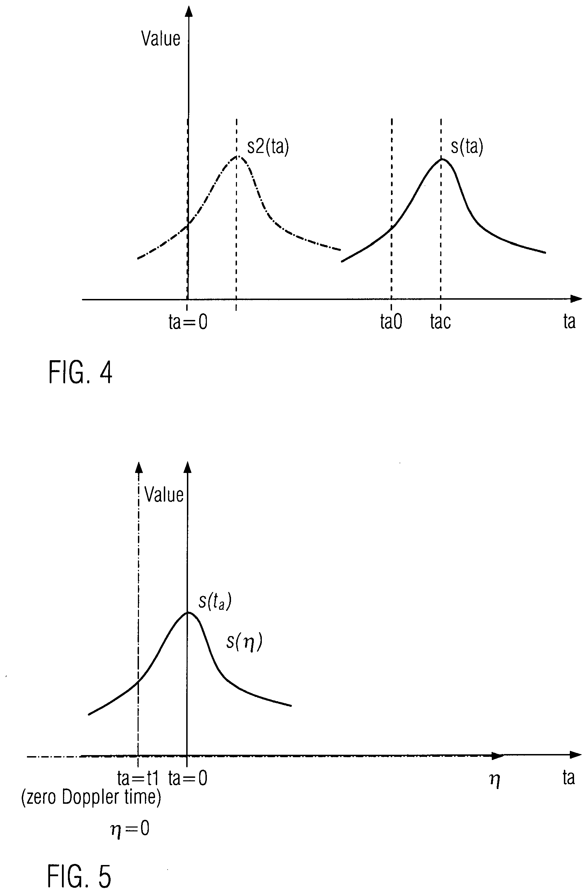

$S_2(f_a)$ of FIG. 4 refers to a signal of positioning a signal of an object to have a zero Doppler time satisfying $t_a=0$, which is the same as the signal used in making the azimuth matched filter for the ETF4ZDT proposed according to an exemplary embodiment of the present invention.

Therefore, like the foregoing description referring to FIG. 3, $S_2(t_a)$, i.e., a signal $O_2(t_a)$ focused by the ETF4ZDT appears at $t_a = t_{a0}$, i.e., at the zero Doppler.

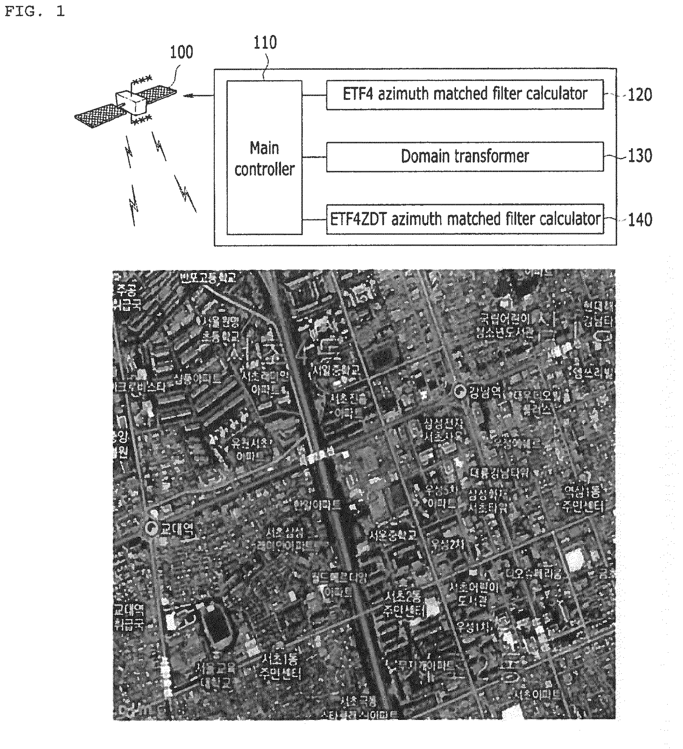

The image processing method for SAR according to an exemplary embodiment of the present invention performs a step of obtaining a first ETF4 azimuth matched filter by an ETF4 azimuth matched filter calculator 120 of the satellite 100 as shown in FIG. 1. (S200)

A phase forming the azimuth signal after a range compression is determined by a range $R_r(t_a)$ between a sensor and an object.

[Expression 1]

$$R_r(t_a) = c_1 t_a + c_1 t_a{}^2 + c_3 t_a{}^3 + c_4 t_a{}^4 + R_r(0)$$

In [Expression 1], $t_a$ is an azimuth time, which is '0' when beam center crossing occurs. $R_r(0)$ refers to a slant range at the beam center crossing time.

Also, coefficients of [Expression 1] are as follows: $c_1 = -\lambda a_1/2$, $c_2 = -\lambda a_2/2$, $c_3 = -\lambda a_3/2$ and $c_4 = -\lambda a_4/2$, where $a_1$ is Doppler centroid), $a_2$ is Doppler Frequency Rate), $a_3$ is a rate of a Doppler frequency rate), and $a_4$ is a rate of the rate of the Doppler frequency rate.

The azimuth signal of an object can be represented in [Expression 2] as follows.

[Expression 2]

$$h(t_a) = \exp[-j\{2(2\pi/\lambda + W_r/C)R(t_a)\}]$$

$$R(t_a) = R_r(t_a) - R_r(0)$$

At this time, $R(t_a)$ forming the phase of the azimuth signal excludes a gradient range in the beam center crossing time. This is to give a phase to the object appearing after the focusing with regard to $R_r(0)$.

An azimuth spectrum of this signal is obtained by azimuth discrete Fourier transform (DFT) of the signal of [Expression 2].

[Expression 3]

$$H(W_a) = \int \exp[j\{-2(2\pi/\lambda + W_r/C)R(t_a) - W_a t_a\}]dt_a$$

[Expression 3] can be calculated by a principle of stationary phase (POSP).

The phase in [Expression 3] is calculated by [Expression 4] as follows.

[Expression 4]

$$\varphi(t_a) = -2(2\pi/\lambda + W_r/C)R(t_a) - W_a t_a$$

A stationary Point, i.e., $t_a = t_a^*$ satisfies the following [Expression 5].

[Expression 5]

$$\varphi'(t_a) = -2(2\pi/\lambda + W_r/C)R'(t_a) - W_a = 0$$

[Expression 6]

$$R'(t_a) = c_1 + 2c_2 t_a + 3c_3 t_a^2 + 4c_4 t_a^3$$

[Expression 6] obtained by differentiation of [Expression 1] is substituted into [Expression 5], thereby obtaining the following [Expression 7].

[Expression 7]

$$\varphi'(t_a) = -2(2\pi/\lambda + W_r/C)(c_1 + 2c_2 t_a + 3c_3 t_a^2 + 4c_4 t_a^3) - W_a$$

$$= -2(2\pi/\lambda + W_r/C)4c_4 t_a^3 - 2(2\pi/\lambda + W_r/C)3c_3 t_a^2$$

$$-2(2\pi/\lambda + W_r/C)2c_2 t_a - 2(2\pi/\lambda + W_r/C)c_1 - W_a$$

$$= 0$$

The cubic equation of [Expression 7] has a solution of $t_a = t_a^*$, and thus the azimuth signal of the ETF4 is represented in [Expression 8].

[Expression 8]

$$H(W_a) = \exp[j\varphi(t_a^*)]$$

Therefore, the ETF4 azimuth matched filter is calculated by [Expression 9] as follows.

[Expression 9]

$$M(W_a) = H^*(W_a) = \exp[-j\varphi(t_a^*)]$$

The image processing method for SAR according to an exemplary embodiment of the present invention includes the next step of transforming the domain of the ETF4 azimuth matched filter, obtained in the step 'S200', by the domain transformer 130 of the satellite 100. (S300)

To make the ETF4ZDT azimuth matched filter, the domain $t_a$ is first transformed in the azimuth signal of [Expression 2].

FIG. 5 is illustrated in connection with FIGs. 2 and 4, in which the domain $t_a$ is an azimuth time domain of ETF4.

Here, $t_a=0$ indicates the Doppler centroid time of the signal.

In this domain, $t_1$ indicates the zero Doppler time.

A new domain, in which the signal of [Expression 2] has to be represented to make the ETF4ZDT azimuth matched filter, is $\eta$, and a correlation between $t_a$ and $\eta$ is shown in [Expression 10] as follows.

[Expression 10]

$$\eta = t_a - t_1$$

In [Expression 10], $t_1$ is the zero Doppler time of an object on the domain of $t_a$.

The image processing method for SAR according to an exemplary embodiment of the present invention includes a step of obtaining an initial ETF4ZDT azimuth matched filter by an ETF4DT azimuth matched filter calculator 140 of the satellite 100. (S400)

[Expression 10] is transformed to establish the following [Expression 11].

[Expression 11]

$$t_a = \eta + t_1$$

If [Expression 11] is substituted into [Expression 2], the azimuth signal of an object is represented in $\eta$, as shown in the following [Expression 12].

[Expression 12]

$$h(\eta + t_1) = \exp[-j\{2(2\pi/\lambda + W_r/C)R_r(\eta + t_1)\}] = h_1(\eta)$$

As opposed to [Expression 2], the relative distance $R_r(t_a)$ instead of $R(t_a)$ is directly used in [Expression 12].

Here, $P(\eta + t_1)$ can be obtained through [Expression 1].

[Expression 13]

$$R_r(\eta + t_1) = c_1(\eta + t_1) + c_1(\eta + t_1)^2 + c_3(\eta + t_1)^3 + c_4(\eta + t_1)^4 + R_r(0)$$

$$= c_4\eta^4 + (c_3 + 4c_4t_1)\eta^3 + (c_2 + 3c_3t_1 + 6c_4t_1^2)\eta^2 + (c_1 + 2c_2t_1 + 3c_3t_1^2 + 4c_4t_1^3)\eta +$$

$$c_1t_1 + c_2t_1^2 + c_3t_1^3 + c_4t_1^4 + R_r(0)$$

$$= R_{r1}(\eta)$$

The azimuth spectrum of [Expression 12] is obtained by applying the azimuth discrete Fourier transform (DFT) to the signal of [Expression 12].

Meanwhile, the following [Expression 14] can be calculated through the principal of stationary phase (POSP).

[Expression 14]

$$H_1(W_\eta) = \int \exp[j\{-2(2\pi/\lambda + W_r/C)R_{r1}(\eta) - W_\eta\eta\}]d\eta$$

The phase in [Expression 14] is represented by [Expression 15] as follows.

[Expression 15]

$$\varphi_1(\eta) = -2(2\pi/\lambda + W_r/C)R_{r1}(\eta) - W_\eta\eta$$

A stationary Point, i.e., $\eta = \eta^*$ satisfies the following [Expression 16].

[Expression 16]

$$\varphi_1'(\eta) = -2(2\pi/\lambda + W_r/C)R'_{r1}(\eta) - W_\eta = 0$$

Meanwhile, the following [Expression 17] can be derived by differentiation of [Expression 13] with regard to $\eta$.

[Expression 17]

$$R'_{r1}(\eta) =$$

$$= 4c_4\eta^3 + 3(c_3 + 4c_4t_1)\eta^2 + 2(c_2 + 3c_3t_1 + 6c_4t_1^2)\eta + (c_1 + 2c_2t_1 + 3c_3t_1^2 + 4c_4t_1^3)$$

If [Expression 17] is substituted into [Expression 16], the following [Expression 18] is derived.

[Expression 18]

$$\varphi_1'(\eta) = -2(2\pi/\lambda + W_r/C) \cdot 4c_4\eta^3 - 2(2\pi/\lambda + W_r/C) \cdot 3(c_3 + 4c_4t_1)\eta^2$$

$$-2(2\pi/\lambda + W_r/C) \cdot 2(c_2 + 3c_3t_1 + 6c_4t_1^2)\eta$$

$$-2(2\pi/\lambda + W_r/C) \cdot (c_1 + 2c_2t_1 + 3c_3t_1^2 + 4c_4t_1^3) - W_\eta = 0$$

The equation of [Expression 18] has a solution of $\eta = \eta^*$, and thus the azimuth spectrum of the ETF4ZDT is represented in [Expression 19].

[Expression 19]

$$H_1(W_\eta) = \exp[j\varphi_1(\eta^*)] = \exp[j\{-2(2\pi/\lambda + W_r/C)R_{r1}(\eta^*) - W_\eta\eta^*\}]$$

If the azimuth focusing is performed by the azimuth matched filter based on [Expression 19], a phase having distance information between the sensor and the target object does not remain at all in a result image.

Phase information is needed for SAR image utilization such as micro displacement measurement (interferometry).

In particular, there is a need of a closest approach R between the sensor and the object.

The reason is because this information depends on not the position of the sensor but only a relative motion between the sensor and the object and therefore may be used as a main parameter in micro displacement measurement (interferometry).

Accordingly, $R_{r2}(\eta) = R_{r1}(\eta) - R_0$ is substituted for $R_{r1}(\eta)$ of [Expression 13], and $R_{r2}(\eta^*)$ is substituted for $R_{r1}(\eta^*)$ of [Expression 19] in accordance with calculation processes.

The reason why such a change cannot change $\eta^*$ is because difference between $R_{r1}(\eta)$ and $R_{r2}(\eta)$ is a constant value.

[Expression 20]

$$R_{r2}(\eta) = R_{r1}(\eta) - R_0 = R_{r1}(\eta) - R_{r1}(0)$$

$$= c_4\eta^4 + (c_3 + 4c_4t_1)\eta^3 + (c_2 + 3c_3t_1 + 6c_4t_1^2)\eta^2 + (c_1 + 2c_2t_1 + 3c_3t_1^2 + 4c_4t_1^3)\eta$$

Therefore, the exact transfer function 4th order zero doppler time (ETF4ZDT) azimuth matched filter is represented in [Expression 21] as follows.

[Expression 21]

$$M(W_a) = \exp[j\{2(2\pi/\lambda + W_r/C)R_{r2}(\eta') + W_\eta\eta^*\}]$$

As described above, the image processing method for SAR according to an exemplary embodiment can form an SAR image based on raw data in a spotlight or sliding spotlight observation mode, which cannot be processed by a conventional ETF4 method, and reduce an quadratic range error by as many as 10 times as compared with results from applying the effective velocity.

Although a few exemplary embodiments of the present invention have been shown and described, it will be appreciated by those skilled in the art that changes may be made in these embodiments without departing from the principles of the invention, the scope of which is defined in the appended claims and their equivalents.

**Claims**

1.  An image processing method for synthetic aperture radar, SAR, including:

    obtaining a 4th-order exact transfer function, ETF4, azimuth matched filter;
    transforming a domain of the ETF4 azimuth matched filter; and
    obtaining a 4th-order exact transfer function zero Doppler time, ETF4ZDT, azimuth matched filter through the domain transformed;
    wherein the ETF4 azimuth matched filter is expressed by

    $$M(W_a) = H^*(W_a) = \exp[-j\varphi(t_a^*)]$$

    where, $H^*(W_a)$ is an azimuth spectrum, $\varphi(t_a^*)$ is a phase of the spectrum, $W_a$ is the angular frequency in azimuth, and $t_a$ is an azimuth time;

    wherein transforming the domain includes substituting $\eta + t_1$ for $t_a$,
    where, $\eta$ is a new domain, and $t_1$ is a zero Doppler time of an object on the domain $t_a$;
    wherein the ETF4ZDT azimuth matched filter is expressed by

$$M(W_a)=\exp[j\{2(2\pi/\lambda + W_r/C)R_{r2}(\eta^*)+W_\eta\eta^*\}],$$

where, $\eta^*$ is an azimuth Time $W_r$ is the angular frequency in range, W is the angular frequency of the new domain, C is the speed of light, $\eta$ and $R_{r2}(\eta^*)$ is a distance between a satellite sensor and an object at a time $\eta$.

2. An apparatus for synthetic aperture radar, the apparatus comprising:

means for obtaining a 4th-order exact transfer function, ETF4, azimuth matched filter;
means for transforming a domain of the ETF4 azimuth matched filter; and
means for obtaining a 4th-order exact transfer function zero Doppler time, ETF4ZDT, azimuth matched filter through the domain transformed;
wherein the ETF4 azimuth matched filter is expressed by

$$M(W_a)=H^*(W_a)=\exp[-j\varphi(t_a^*)]$$

where, $H^*(W_a)$ is an azimuth spectrum, $\varphi(t_a^*)$ is a phase of the spectrum, $W_a$ is the angular frequency in azimuth, and $t_a$ is an azimuth time;

wherein transforming the domain includes substituting $\eta+t_1$ for $t_a$,
where, $\eta$ is a new domain, and $t_1$ is a zero Doppler time of an object on the domain $t_a$;
wherein the ETF4ZDT azimuth matched filter is expressed by

$$M(W_a)=\exp[j\{2(2\pi/\lambda + W_r/C)R_{r2}(\eta^*)+W_\eta\eta^*\}],$$

where, $\eta^*$ is an azimuth Time $W_r$ is the angular frequency in range, W is the angular frequency of the new domain, C is the speed of light, $\eta$ and $R_{r2}(\eta^*)$ is a distance between a satellite sensor and an object at a time $\eta$.

**Patentansprüche**

1. Bildverarbeitungsverfahren für Radar mit synthetischer Apertur (Synthetic Aperture Radar, SAR), das beinhaltet:

Erhalten eines ETF4-Azimut-Anpassungsfilters (4th-order exact transfer function);
Transformieren einer Domäne des ETF4-Azimut-Anpassungsfilters; und
Erhalten eines ETF4ZDT-Azimut-Anpassungsfilters (4th-order exact transfer function zero Doppler time) durch die transformierte Domäne;
wobei der ETF4- Azimut-Anpassungsfilter ausgedrückt wird durch

$$M(W_a) = H^*(W_a) = exp[-j\varphi(t_a^*)]$$

wobei $H^*(W_a)$ ein Azimut-Spektrum ist, $\varphi(t_a^*)$ eine Phase des Spektrums ist, $W_a$ die Winkelfrequenz in Azimut ist und $t_a$ eine Azimut-Zeit ist;
wobei das Transformieren der Domäne das Substituieren von $\eta + t_1$ für, $t_a$ beinhaltet,
wobei $\eta$ eine neue Domäne ist und $t_1$ eine Null-Dopplerzeit eines Objekts auf der Domäne $t_a$ ist;
wobei der ETF4ZDT-Azimut-Anpassungsfilter ausgedrückt wird durch

$$M(W_a) = \exp\left[j\{2(2\pi/\lambda + W_r/C)R_{r2}(\eta^*) + W_\eta\eta^*\}\right]$$

wobei $\eta^*$ eine Azimut-Zeit ist, $W_r$ die Winkelfrequenz im Bereich ist, $W$ die Winkelfrequenz der neuen Domäne ist, $C$ die Lichtgeschwindigkeit ist, und $R_{r2}(\eta^*)$ eine Distanz zwischen einem Satellitensensor und einem Objekt zu einem Zeitpunkt $\eta$ ist.

2. Vorrichtung für Radar mit synthetischer Apertur, wobei die Vorrichtung umfasst:

ein Mittel zum Erhalten eines ETF4-Azimut-Anpassungsfilters (4th-order exact transfer function);
ein Mittel zum Transformieren einer Domäne des ETF4-Azimut-Anpassungsfilters; und
ein Mittel zum Erhalten eines ETF4ZDT-Azimut-Anpassungsfilters (4th-order exact transfer function zero Doppler time) durch die transformierte Domäne;
wobei der ETF4- Azimut-Anpassungsfilter ausgedrückt wird durch

$$M(W_a) = H^*(W_a) = exp[-j\varphi(t_a^*)]$$

wobei $H^*(W_a)$ ein Azimut-Spektrum ist, $\varphi(t_a^*)$ eine Phase des Spektrums ist, $W_a$ die Winkelfrequenz in Azimut ist und $t_a$ eine Azimut-Zeit ist;
wobei das Transformieren der Domäne das Substituieren von $\eta + t_1$ für $t_a$ beinhaltet,
wobei $\eta$ eine neue Domäne ist und $t_1$ eine Null-Dopplerzeit eines Objekts auf der Domäne $t_a$ ist;
wobei der ETF4ZDT-Azimut-Anpassungsfilter ausgedrückt wird durch

$$M(W_a) = \exp\left[j\{2(2\pi/\lambda + W_r/C)R_{r2}(\eta^*) + W_\eta\eta^*\}\right]$$

wobei $\eta^*$ eine Azimut-Zeit ist, $W_r$ die Winkelfrequenz im Bereich ist, $W$ die Winkelfrequenz der neuen Domäne ist, $C$ die Lichtgeschwindigkeit ist, und $R_{r2}(\eta^*)$ eine Distanz zwischen einem Satellitensensor und einem Objekt zu einem Zeitpunkt $\eta$ ist.

## Revendications

1. Procédé de traitement d'image pour radar à synthèse d'ouverture, ROS, consistant à :

obtenir une fonction de transfert exacte de 4e rang, ETF4, de filtrage adapté en azimut; transformer un domaine du filtre correspondant à l'azimut ETF4; et
obtenir une fonction de transfert exacte de 4e rang, un temps Doppler nul, ETF4ZDT, un filtre correspondant à l'azimut à travers le domaine transformé;
dans lequel le filtre adapté à l'azimut ETF4 est exprimé par

$$M(W_a) = H^*(W_a) = exp[-j\Phi(t_a^*)]$$

où $H^*(W_a)$ est un spectre d'azimut, $\phi(t_a')$ est une phase du spectre,
W est la fréquence angulaire en azimut, et $t_a$ est un temps d'azimut;

dans lequel la transformation du domaine comprend la substitution de $n+t_1$ pour $t_a$,
où, $\eta$ est un nouveau domaine, et $t_1$ est un temps Doppler zéro d'un objet sur le domaine $t_a$;
dans lequel le filtre correspondant à l'azimut ETF4ZDT est exprimé par

$$M(W_a) = exp[j\{2(2\pi/\lambda + W_r/C)R_{r2}(\eta') + W_\eta\eta'\}],$$

où, $\eta$ est un temps d'azimut, $w_r$ est la fréquence angulaire dans la gamme, W est la fréquence angulaire du nouveau domaine, C est la vitesse de la lumière,
et $R_{2r}(\eta)$ est une distance entre un capteur de satellite et un objet à un instant $\eta$.

2. Appareil pour radar à synthèse d'ouverture, l'appareil comprenant :

des moyens pour obtenir une fonction de transfert exacte de 4e rang, ETF4, de filtrage adapté en azimut; des moyens pour transformer un domaine du filtre correspondant à l'azimut ETF4; et des moyens pour obtenir une fonction de transfert exacte de 4e rang, un temps Doppler nul, ETF4ZDT, de filtrage correspondant à l'azimut à travers le domaine transformé;

dans lequel le filtre correspondant à l'azimut ETF4 est exprimé par

$$M(W_a)=H^*(W_a)=exp[-j\Phi(t_a^*)]$$

où $H^*(W_a)$ est un spectre d'azimut, $\phi(t_a')$ est une phase du spectre,
$W_a$ est la fréquence angulaire en azimut, et $t_a$ est un temps d'azimut;

dans lequel la transformation du domaine comprend la substitution de $n+t_1$ pour $t_a$,
où, $\eta$ est un nouveau domaine, et $t_1$ est un temps Doppler zéro d'un objet sur le domaine $t_a$;
dans lequel le filtre correspondant à l'azimut ETF4ZDT est exprimé par

$$M(W_a)=exp[j\{2(2\pi/\lambda + W_r/C)R_{r2}(\eta')+W_\eta\eta'\}],$$

où, $\eta'$ est un temps d'azimut, $W_r$ est la fréquence angulaire dans la plage,
W est la fréquence angulaire du nouveau domaine, C est la vitesse de la lumière, et $R_{r2}(\eta')$ est une distance entre un capteur de satellite et un objet à un instant $\eta$.

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 101207220

- US 5200754 A

### Non-patent literature cited in the description

- **FENG HE et al.** Processing of Ultrahigh-Resolution Spaceborne Sliding Spotlight SAR Data on Curved Orbit. *IEEE Transactions on Aerospace and Electronic Systems,* 01 April 2013, vol. 49 (2), ISSN 0018-9251

- **KNUT ELDHUSET.** A new fourth-order processing algorithm for spaceborne SAR. *IEEE Transactions on Aerospace and Electronic Systems,* 01 July 1998, vol. 34 (3), ISSN 0018-9251